# EUROPÄISCHE PATENTANMELDUNG

(11) **EP 4 000 376 A1**
(43) Veröffentlichungstag der Anmeldung: **25.05.2022**
(21) Anmeldenummer: 21208160.8
(22) Anmeldetag: 15.11.2021
(51) Int. Cl.: A01D 43/08, A01D 69/00

(54) **ANBAUHÄCKSLER MIT EINEM GETRIEBE, DAS AN EINE ZAPFWELLE EINES SCHLEPPERS ANSCHLIESSBAR IST, ARBEITSZUG MIT DEM ANBAUHÄCKSLER UND DEM SCHLEPPER, UND VERFAHREN ZUM EINSTELLEN EINES EINSTELLWINKELS**

(30) Priorität: 16.11.2020 DE 102020130149
(71) Anmelder: Maschinenfabrik Bernard Krone GmbH & Co. KG, 48480 Spelle (DE)
(72) Erfinder: Horstmann, Josef, 49479 Ibbenbüren (DE); Weiss, Peter, 48488 Emsbüren (DE); Kreyenhagen, Michael, 49163 Bohmte (DE); Mösker, Markus, 48480 Lünne (DE); Rickert, Clemens, 48683 Ahaus (DE); Schnelting, Mathias, 46354 Südlohn-Oeding (DE)

(57) **Zusammenfassung**

Die vorliegende Erfindung betrifft Anbauhäcksler (1) zum Anbauen an einen Schlepper (7), mit einem Kanalanschluss (91), an den ein Vorsatzgerät (9) zum Ernten von Erntegut (4) anbaubar ist, wobei sich in einer Gutflussrichtung (40) ein Vorpressaggregat (60) zum Vorpressen des Ernteguts (4) unmittelbar anschließt, dem ein Zerkleinerungsaggregat (62) zum Häckseln des Ernteguts (4) nachgeordnet ist, wobei der Anbauhäcksler (1) zum Antrieb der Aggregate (60, 62) und/oder des Vorsatzgerätes (9) ein Getriebe (22) umfasst, das an eine Zapfwelle (74) des Schleppers (7) anschließbar ist, wobei das Getriebe (22) und/oder eine Abtriebswelle (21) des Getriebes (22) in einer Erstreckungsrichtung, die sich quer zu einer Arbeitsrichtung (41) des Anbauhäckslers (1) erstreckt, zumindest unterhalb einer das Zerkleinerungsaggregat (62) begrenzenden fiktiven Einbauebene (I), oder unterhalb des Zerkleinerungsaggregates (62) angeordnet sind. Die vorliegende Erfindung betrifft weiterhin einen solchen Anbauhäcksler (1), wobei das Zerkleinerungsaggregat (62) in einer Querrichtung (43), die sich quer zur Erstreckungsrichtung und quer zur Arbeitsrichtung (41) erstreckt, durch wenigstens eine Gehäusewand (16) begrenzt ist, wobei die Abtriebswelle (21) des Getriebes (22) frei drehbar in der Gehäusewand (16) gelagert ist. Die vorliegende Erfindung betrifft weiterhin einen Arbeitszug (100) mit einem Schlepper (7) und einem solchen Anbauhäcksler (1) sowie ein Verfahren zum Einstellen einer Anbauhöhe (H) des Anbauhäckslers (1).

## Beschreibung

Die vorliegende Erfindung betrifft Anbauhäcksler zum Anbauen an einen Schlepper, mit einem Kanalanschluss, an den ein Vorsatzgerät zum Ernten von Erntegut anbaubar ist, wobei sich in einer Gutflussrichtung ein Vorpressaggregat zum Vorpressen des Ernteguts unmittelbar anschließt, dem ein Zerkleinerungsaggregat zum Häckseln des Ernteguts nachgeordnet ist, wobei der Anbauhäcksler zum Antrieb der Aggregate und/oder des Vorsatzgerätes ein Getriebe umfasst, das an eine Zapfwelle des Schleppers anschließbar ist. Die vorliegende Erfindung betrifft weiterhin einen Arbeitszug mit einem Schlepper und einem solchen Anbauhäcksler sowie ein Verfahren zum Einstellen einer Anbauhöhe des Anbauhäckslers.

Anbauhäcksler sind zum Ernten und Häckseln von für die Silage verwendetem Erntegut vorgesehen, vor allem von Gras, Heu und Mais, aber auch von Ganzpflanzen. Sie werden an einen Schlepper angehängt oder angebaut. Dabei sind aus frühen Zeiten Anbauhäcksler bekannt, die zum Abernten von ein bis drei Reihen Mais genutzt werden. In dieser Ausführungsform werden die Anbauhäcksler zumeist seitlich des Schleppers geführt. Ein Getriebe für einen seitlich eines Schleppers geführten Anbauhäcksler offenbart die Druckschrift DE 34 11 672 A1.

Später sind auch Anbauhäcksler gebaut worden, die an einen Schlepper anbaubar sind, und die einen Kanalanschluss aufweisen, an den Vorsatzgeräte, die sich auch für selbstfahrende Feldhäcksler eignen, modular anbaubar sind. Dadurch können Vorsatzgeräte verschiedener Typen mit demselben Anbauhäcksler genutzt werden.

Um Vorsatzgeräte modular nutzen zu können, wird der Anbauhäcksler häufig an das Front- oder Heckhubwerk des Schleppers angebaut. Bei Anbau an das Heckhubwerk ist es bekannt, den Schlepper während des Erntebetriebs auf dem Feld im Rückwärtsfahrbetrieb zu nutzen. Im Vergleich zum Anbau des Anbauhäckslers an das Fronthubwerk und Betrieb des Schleppers während des Erntebetriebs auf dem Feld im Vorwärtsfahrbetrieb kann der Schlepper im Rückwärtsfahrbetrieb eine größere Last tragen.

In früheren Zeiten war die Größe der anbaubaren Vorsatzgeräte durch die Leistungsfähigkeit der Schlepper begrenzt. Die heutzutage bekannten Anbauhäcksler sind im Gegensatz dazu nicht mehr für die Leistungsfähigkeit großer Schlepper ausgelegt.

Aufgabe der vorliegenden Erfindung ist es, einen leistungsstarken Anbauhäcksler zu schaffen, der sich zum Anbauen großer Vorsatzgeräte an leistungsstarke Schlepper, insbesondere mit 500 PS und mehr, eignet.

Die Aufgabe wird gelöst mit einem Anbauhäcksler mit den Merkmalen des unabhängigen Patentanspruchs 1, einem Arbeitszug mit den Merkmalen des unabhängigen Patentanspruchs 10, und einem Verfahren zum Einstellen einer Anbauhöhe des Anbauhäckslers mit den Merkmalen des unabhängigen Patentanspruchs 13. Vorteilhafte Ausführungsformen sind den abhängigen Ansprüchen entnehmbar.

Dafür wird ein Anbauhäcksler geschaffen. Der Anbauhäcksler ist zum Anbauen an einen Schlepper vorgesehen. Vorzugsweise ist er an ein Front- oder Heckhubwerk des Schleppers anbaubar. Der Schlepper weist vorzugsweise 500 PS oder mehr auf.

Der Anbauhäcksler weist einen Kanalanschluss auf. An den Kanalanschluss ist ein Vorsatzgerät zum Ernten von Erntegut anbaubar. Ein solches Vorsatzgerät kann zum Ernten von Mais, zum Schneiden und/oder Aufnehmen von Gras oder Heu, oder zum Ernten von Ganzpflanzen vorgesehen sein. Es ist insbesondere auch an selbstfahrende Feldhäcksler anbaubar.

Dem Kanalanschluss des Anbauhäckslers schließt sich in einer Gutflussrichtung ein Vorpressaggregat zum Vorpressen des Ernteguts unmittelbar an. Dem Vorpressaggregat ist ein Zerkleinerungsaggregat zum Häckseln des Ernteguts nachgeordnet. Dem Zerkleinerungsaggregat ist bevorzugt weiterhin ein Auswurfstutzen nachgeordnet, durch den das Erntegut aus dem Anbauhäcksler auswerfbar ist. Am Auswurfstutzen ist bevorzugt ein Auswurfrohr befestigt. Das Auswurfrohr dient als Verlängerung des Auswurfstutzens und ist zum Auswerfen des Ernteguts auf einen Ladewagen vorgesehen. Vorzugsweise ist es dafür drehbar und/oder höhenverstellbar am Auswurfstutzen befestigt.

Zwischen dem Zerkleinerungsaggregat und dem Auswurfstutzen kann in einer Maisernteanordnung zudem ein Korncracker angeordnet sein. Der Korncracker ist zum Aufbrechen der Körner vorgesehen. Dadurch wird eine Schale Körner aufgebrochen und Stärke im Innern der Körner von außen zugänglich. Der Korncracker ist in einer Heuernteanordnung, in der Gras oder Heu geerntet wird, nicht vorgesehen.

Der Anbauhäcksler weist zum Antrieb der Aggregate und/oder des Vorsatzgerätes ein Getriebe auf. Das Getriebe ist an eine Zapfwelle des Schleppers anschließbar.

Er zeichnet sich dadurch aus, dass das Getriebe und/oder eine Abtriebswelle des Getriebes unterhalb einer das Zerkleinerungsaggregat begrenzenden ersten fiktiven Einbauebene, die sich quer zu einer Erstreckungsrichtung erstreckt, oder unterhalb des Zerkleinerungsaggregates angeordnet sind.

Dabei ist die Erstreckungsrichtung in ebenem Gelände, insbesondere in horizontalem Gelände, die vertikale Richtung.

Durch den Einbau des Getriebes unterhalb der ersten fiktiven Einbauebene des Zerkleinerungsaggregates, oder unterhalb des Zerkleinerungsaggregates kann der Anbauhäcksler in Arbeitsrichtung sehr kurz und kompakt gebaut sein.

Dadurch ist das Zerkleinerungsaggregat zwar verhältnismäßig hoch angeordnet, und ein Förderkanal für das Erntegut muss insgesamt verhältnismäßig steil ansteigend ausgebildet werden.

Vorteilhaft ermöglicht diese sehr kurze und kompakte Bauform des Anbauhäckslers aber, dass das auf die Hinterachse des Schleppers wirkende Gewicht ausreichend klein ist, um die Vorderachse nicht zu stark zu entlasten, und/oder den Schlepper während der Ernte nicht zu überlasten. Diese Bauform bewirkt, dass ein Hebelarm, mit dem der Anbauhäcksler, beziehungsweise eine Häckselanordnung umfassend den Anbauhäcksler und ein an diesen angebautes Vorsatzgerät, auf das Front- oder Heckhubwerk des Schleppers wirkt, sowie ein Schwerpunktabstand des Anbauhäckslers vom Schlepper, insbesondere von der ihn tragenden Achse des Schleppers, ausreichend klein sind.

Im Vergleich zu einem Anbauhäcksler, dessen Schwerpunktabstand vom Schlepper größer ist, kann an den erfindungsgemäßen Anbauhäcksler ein großes Vorsatzgerät angebaut werden, beispielsweise ein 6-, 8- oder sogar 10- reihiges Vorsatzgerät. Dabei bedarf es dennoch, auch bei Anbau des Anbauhäckslers am Heckhubwerk des Schleppers, keines Gegengewichts an der Front des Schleppers.

In einer bevorzugten Ausführungsform, die die Aufgabe ebenfalls löst, ist das Zerkleinerungsaggregat in einer Querrichtung, die sich quer zur Erstreckungsrichtung und quer zur Arbeitsrichtung erstreckt, durch wenigstens ein Gehäusebauteil begrenzt, wobei die Abtriebswelle des Getriebes frei drehbar in dem Gehäusebauteil gelagert ist. Dabei kann das Gehäusebauteil ein Rahmenbauteil, beispielsweise eine Strebe, oder eine Gehäusewand sein.

Durch die freie Beweglichkeit der Abtriebswelle kann der Anbauhäcksler sehr nah an den Schlepper angebaut werden, ohne dass eine übermäßige Belastung und/oder ein übermäßiger Verschleiß der Antriebskomponenten des Anbauhäckslers und des Schleppers auftritt.

Denn die freie Beweglichkeit der Abtriebswelle des Getriebes ermöglicht, dass sich das Getriebe, und mit ihm auch seine Antriebswelle, beim Drehen der Abtriebswelle mit dieser drehen. Trotz eines möglichst geringen Abstandes des Anbauhäckslers vom Schlepper kann dadurch das Getriebe in einem optimierten Einstellwinkel zur Zapfwelle angeordnet sein.

Bei der Verbindung der Zapfwelle und der Antriebswelle mit einer Kardanwelle sind diese unabhängig von der Anbauhöhe des Anbauhäckslers am Schlepper dadurch immer optimiert, insbesondere in einer annähernd gleichwinkeligen w- Beuge oder in einer annähernd gleichwinkeligen z- Beuge, zueinander ausgerichtet. Zum einen kann dadurch ein Antrieb der Antriebswelle mit einer konstanten Geschwindigkeit erfolgen. Zum anderen können große Winkel an oder in der Kardanwelle vermieden werden, so dass eine starke Belastung der Kardanwelle, und ein demzufolge einsetzender, übermäßiger Verschleiß der Zapfwelle, der Antriebswelle und/oder der Kardanwelle vermieden werden.

Dabei ist es bevorzugt, dass das Gehäusebauteil eine Gehäusewand ist. Weiterhin bevorzugt weist das Zerkleinerungsaggregat zwei voneinander beabstandete, einander gegenüberliegende Gehäusewände auf. Vorzugsweise ist das Getriebe zwischen den Gehäusewänden angeordnet. Besonders bevorzugt ist das Getriebe in Querrichtung etwa mittig zwischen den Gehäusewänden angeordnet. Dabei ist es weiterhin bevorzugt, dass die Abtriebswelle das Getriebegehäuse des Getriebes vollständig durchsetzt. Ganz besonders bevorzugt ist die Abtriebswelle beidseitig des Getriebegehäuses aus diesem herausgeführt. Dadurch kann sie in den Gehäusewänden frei drehbar gelagert sein.

Vorzugsweise weist der Anbauhäcksler eine zum Anlenken an einen Rahmen des Schleppers vorgesehene Lenkeranordnung auf. Die Lenkeranordnung wirkt bevorzugt als Drehmomentstütze für das Getriebe. Bei am Schlepper angebautem Anbauhäcksler hält die Lenkeranordnung das Getriebe daher in einem durch eine Anbauhöhe der Lenkeranordnung sowie eine Anbauhöhe des Anbauhäckslers an den Schlepper bestimmten Drehwinkel. Nach einem Lösen der Anlenkung der Lenkeranordnung vom Schlepper kann sich das Getriebe hingegen frei drehen. Um ein unkontrolliertes Drehen des Getriebes zu verhindern, können ein Anschlag oder eine Verankerung für das Getriebe und/oder die Lenkeranordnung am Gehäuse des Anbauhäckslers vorgesehen sein.

In einer bevorzugten Ausführungsform ist das Getriebe als Kegelradgetriebe ausgebildet. Dadurch ermöglicht es eine winkelige, vorzugsweise rechtwinklige, Ausrichtung der Abtriebswelle zur Antriebswelle, insbesondere auf kleinem Raum. Prinzipiell sind aber auch andere Getriebe bevorzugt.

Das Getriebe oder die Abtriebswelle können in oder gegen die Arbeitsrichtung des Anbauhäckslers zur Häckseltrommel, insbesondere zu einer Häckseltrommelachse, entlang der sich die Häckseltrommel erstreckt, versetzt angeordnet sein. In dieser Ausführungsform sind sie jedenfalls in Erstreckungsrichtung unterhalb der ersten Einbauebene angeordnet.

Es ist aber bevorzugt, dass das Zerkleinerungsaggregat eine Häckseltrommel sowie einen Förderboden umfasst. Dabei erstreckt sich der Förderboden bevorzugt zumindest bereichsweise konzentrisch um die Häckseltrommel. Weiterhin bevorzugt ist das Zerkleinerungsaggregat in Arbeitsrichtung durch eine zweite und eine dritte, einander gegenüberliegende, fiktive Ebenen begrenzt. Die zweite und die dritte fiktive Ebene erstrecken sich bevorzugt quer zur Erstreckungsrichtung. Sie können dabei etwa quer zu den Gehäusewänden angeordnet sein. Vorzugsweise liegen sie tangential an der Häckseltrommel oder dem Förderboden an. Dabei ist es besonders bevorzugt, dass das Getriebe und/oder die Abtriebswelle zwischen der zweiten und der dritten fiktiven Ebene angeordnet sind. In dieser Ausführungsform sind sie daher in Erstreckungsrichtung unterhalb der Häckseltrommel und/oder des Förderbodens angeordnet.

Prinzipiell ist auch eine Ausbildung des Zerkleinerungsaggregates als Scheibenradhäcksler möglich. In dieser Ausführungsform sind das Getriebe und/oder die Abtriebswelle bevorzugt unterhalb des Scheibenrades oder der Scheibenräder und/oder eines diesen zumindest teilweise umgebenden Förderbodens angeordnet.

Besonders bevorzugt sind das Getriebe und/oder die Abtriebswelle wenigstens geringfügig gegen die Arbeitsrichtung, das heißt in Richtung zum Schlepper hin, versetzt zur Häckseltrommel und/oder dem Förderboden angeordnet. Durch den Versatz in Richtung zum Schlepper hin kann die Häckseltrommel näher an den Schlepper angeordnet werden.

Dabei ist es besonders bevorzugt, dass der Anbauhäcksler zum Auswerfen des Ernteguts einen Auswurfstutzen aufweist, der dem Zerkleinerungsaggregat in Gutflussrichtung nachgeordnet ist. Vorzugsweise ist der Auswurfstutzen in Erstreckungsrichtung oberhalb der Häckseltrommel angeordnet. Ganz besonders bevorzugt sind das Getriebe und/oder die Abtriebswelle in Erstreckungsrichtung etwa fluchtend unterhalb des Auswurfstutzens angeordnet. In dieser Ausführungsform begrenzt die dritte fiktive Ebene an einer dem Schlepper zugewandten Seite der Häckseltrommel einen Einbauraum des Getriebes im Anbauhäcksler in Arbeitsrichtung, und die erste fiktive Einbauebene den Einbauraum in Erstreckungsrichtung. Dadurch ist der Anbauhäcksler sehr kurz und kompakt baubar und sehr nach an den Schlepper anbaubar. Bei dieser Ausführungsform ist der Schwerpunktabstand daher optimiert gering.

Die Häckseltrommel ist bevorzugt ebenfalls in den Gehäusewänden gelagert. Dadurch kann ein möglichst symmetrischer Aufbau des Anbauhäckslers erreicht werden.

Um das Getriebe weiterhin möglichst symmetrisch zu belasten, ist es bevorzugt, dass die Abtriebswelle zum Antrieb der Häckseltrommel und/oder eines Korncrackers vorgesehen ist. Zudem kann das Getriebe auch zum Antrieb des Vorpressaggregats und/oder des Vorsatzgerätes vorgesehen sein. Dabei ist es besonders bevorzugt, dass die Abtriebswelle an einer Seite des Getriebes trieblich, mit der Häckseltrommel, und an einer dieser gegenüberliegenden Seite des Getriebes, trieblich mit dem Korncracker verbunden ist. In einer bevorzugten Ausführungsform erfolgt die triebliche Anbindung der Häckseltrommel und/oder des Korncracker mittels eines Riementriebs. Prinzipiell kann aber auch eine andere triebliche Verbindung vorgesehen sein, beispielsweise mittels Zahnrädern.

Für das Getriebe ist bevorzugt eine Trockensumpfschmierung vorgesehen, um einen möglichst großen Wirkungsgrad des Getriebes zu erreichen.

Die Anordnung des Getriebes unterhalb der Häckseltrommel und/oder die freie Drehbarkeit des Abtriebswelle, und mit ihr die freie Drehbarkeit des Getriebes, ermöglichen einen sehr geringen Schwerpunktabstand des Anbauhäckslers von einem Schlepper. Dadurch kann der Schlepper bei der Ernte auch mit großen Vorsatzgeräten betrieben werden, ohne überlastet zu werden.

Die Aufgabe wird weiterhin gelöst mit einem Arbeitszug, umfassend einen Schlepper und einen solchen, an ein Hubwerk des Schleppers angebauten Anbauhäcksler. Bei der Ernte ist an den Anbauhäcksler, insbesondere am Kanalanschluss des Anbauhäckslers, zudem ein Vorsatzgerät angebaut.

Vorzugsweise ist die Antriebswelle des Getriebes des Anbauhäckslers unabhängig von einer Hubstellung des Hubwerks des Schleppers mittels einer Kardanwelle in einer annähernd gleichwinkeligen w- Beuge oder in einer annähernd gleichwinkeligen z- Beuge mit der Zapfwelle des Schleppers verbunden. Trotz sehr nahem Anbau des Anbauhäckslers am Schlepper kann dadurch ein übermäßiger Verschleiß an den Antriebskomponenten des Schleppers und/oder des Anbauhäckslers vermieden werden.

Weiterhin bevorzugt ist das Getriebegehäuse des Getriebes mittels einer Lenkeranordnung mit einem Rahmen des Schleppers verbunden. Da das Getriebegehäuse durch die Lenkeranordnung mit dem Rahmen des Schleppers verbunden ist, bewirkt ein Anheben oder Absenken des Hubwerks, durch das der Anbauhäcksler angehoben oder abgesenkt wird, dass sich das Getriebegehäuse dreht. Dabei ist es bevorzugt, dass die Lenkeranordnung, insbesondere bei am Schlepper angebautem Anbauhäcksler, die einzige Drehmomentstütze für das Getriebegehäuse und/oder das Getriebe des Anbauhäckslers ist.

Die Aufgabe wird weiterhin gelöst mit einem Verfahren zum Einstellen eines Einstellwinkels eines Anbauhäckslers relativ zu einer Zapfwelle eines Schleppers eines solchen Arbeitszugs, und/oder einer Anbauhöhe des Anbauhäckslers an einem Hubwerk des Schleppers, bei dem
- eine an einem Unterlenker des Hubwerks drehbar angelenkte Hubstange des Schleppers betätigt wird,
- wobei sich ein Unterlenker und/oder ein Oberlenker des Hubwerks um einen Anlenkpunkt am Schlepper in oder gegen eine Heberichtung dreht, so dass sich das Hubwerk von einer Grundposition in eine angehobene Position oder zurück verstellt,
- wobei ein Getriebegehäuse des Anbauhäckslers mittels einer Lenkeranordnung an einem Rahmen des Schleppers angelenkt ist, so dass sich das Getriebegehäuse beim Drehen des Unterlenkers und/oder des Oberlenkers dreht,
- wobei sich ein im Getriebegehäuse angeordnetes Getriebe und/oder eine Antriebswelle des Getriebes und/oder eine Abtriebswelle des Getriebes mit dem Getriebegehäuse drehen,
- wobei ein Gehäuse des Anbauhäckslers in oder gegen eine Hubrichtung von einer Grundhöhe in die Anbauhöhe angehoben oder zurück abgesenkt wird.

Bei Drehung des Getriebegehäuses werden das Getriebe, die Antriebswelle und/oder die Abtriebswelle mit dem Getriebegehäuse gedreht. Dadurch wird ein Einstellwinkel zwischen einer Antriebswellenachse und einer Zapfwellenachse eingestellt, so dass eine die Antriebswelle und die Zapfwelle miteinander verbindende Kardanwelle gemeinsam mit diesen beiden Achsen ein gleichschenkliges Dreieck bildet. Ein Kardanwinkel zwischen der Zapfwelle und der Kardanwelle ist daher immer annähernd gleich oder sogar gleich einem Getriebewinkel zwischen der Antriebswelle und der Kardanwelle. Dadurch sind die Antriebskomponenten des Schleppers und des Anbauhäckslers unabhängig von der Anbauhöhe des Anbauhäckslers optimal zueinander positioniert und ein übermäßiger Verschleiß wird vermieden.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine Seitenansicht eines Arbeitszugs im Erntebetrieb, mit einem Schlepper im Rückwärtsfahrbetrieb, der einen Anbauhäcksler trägt, an den ein modulares Vorsatzgerät angebaut ist;
- Fig. 2: schematisch ein Schnittbild des Anbauhäckslers aus Fig. 1;
- Fig. 3: schematisch in (a) eine Frontansicht einer Getriebeanordnung des Anbauhäckslers, und in (b) eine perspektivische Ansicht der Getriebeanordnung aus (a); und
- Fig. 4: schematisch in (a) einen Hubwerksanschluss des Anbauhäckslers an ein Hubwerk des Schleppers in einer Grundposition, und in (b) den Hubwerksanschluss des Anbauhäckslers an das Hubwerk des Schleppers in einer angehobenen Position.

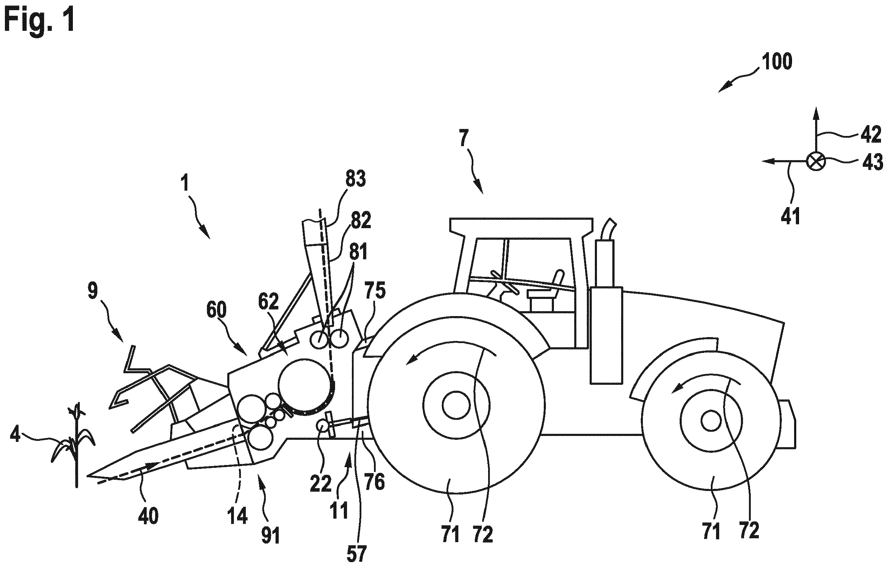

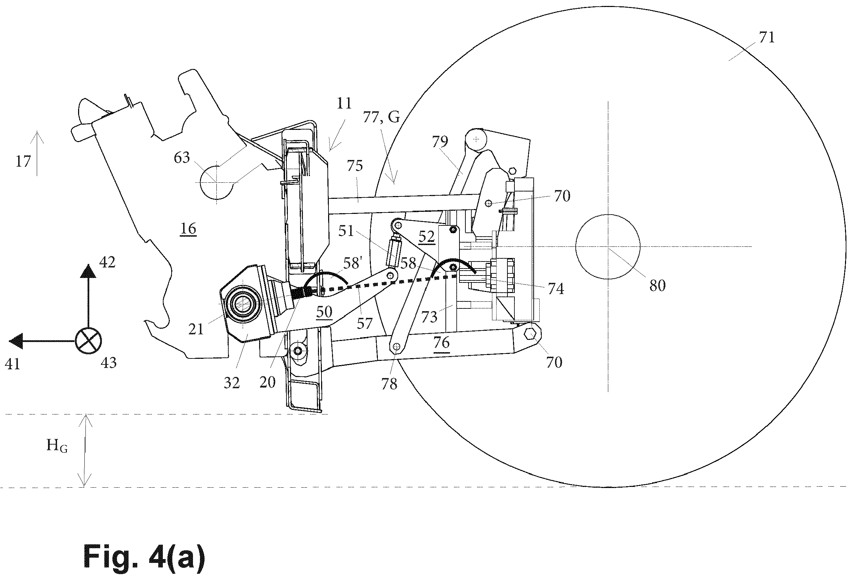

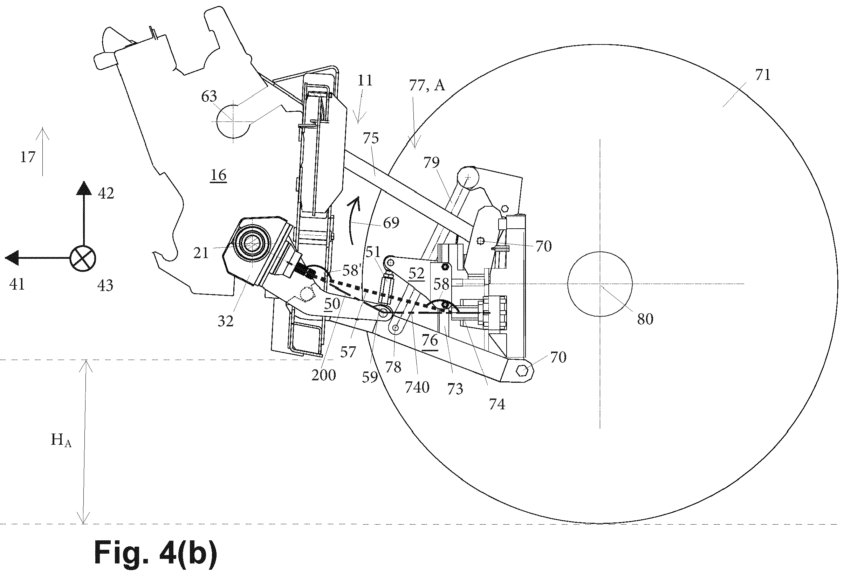

Fig. 1 zeigt einen Arbeitszug 100 mit einem Schlepper 7, an den eine Häckselanordnung angebaut ist, die einen Anbauhäcksler 1 umfasst, sowie ein an den Anbauhäcksler 1 modular angebautes Vorsatzgerät 9. Der Anbauhäcksler 1 weist einen Hubwerksanschluss 11 auf, mit dem er an ein Hubwerk des Schleppers 7, das ist hier das Heckhubwerk 77 (s. Fig. 4) des Schleppers 7, angebaut ist. Sichtbar ist die Anlenkung des Anbauhäckslers 1 an das Heckhubwerk 77 des Schleppers 7 mittels Unterlenkern 76 und eines Oberlenkers 75.

Zum Antrieb des Anbauhäckslers 1 ist dieser an eine Zapfwelle 74 (s. Fig. 4) des Schleppers 7 anschließbar. Dafür zeigt Fig. 1 schematisch ein Getriebe 22, das mittels einer Antriebswelle 20 (s. Fig. 4) antreibbar ist, die mittels einer Gelenkwelle, hier einer Kardangelenkwelle 57, an die Zapfwelle 74 des Schleppers 7 angeschlossen ist.

Die Darstellung zeigt den Arbeitszug 100 in einem Erntebetrieb (nicht bezeichnet), in dem die Häckselanordnung zum Ernten und Häckseln von Erntegut 4, hier insbesondere Mais, genutzt wird. Der Schlepper 7 wird dabei im Rückwärtsfahrbetrieb (nicht bezeichnet) betrieben. Der Rückwärtsfahrbetrieb ist hier schematisch durch die Drehrichtung 70 der Räder 71 des Schleppers 7 dargestellt.

Als Vorsatzgerät 9 ist hier beispielhaft ein Vorsatzgerät 9 zum Ernten von Mais gezeigt. Der Anbauhäcksler 9 ist aber auch mit Vorsatzgeräten 9 eines anderen Typs betreibbar, beispielsweise mit Vorsatzgeräten 9 zum Ernten von Ganzpflanzen oder zum Ernten von Gras oder Heu, insbesondere mit einem Mähwerk zum Schneiden von Gras oder mit einer Pick- up zur Aufnahme von Gras oder Heu.

Das Erntegut 4 wird mit dem Vorsatzgerät 9 geschnitten und/oder aufgenommen und dem Anbauhäcksler 1 in eine Gutflussrichtung 40 zugeführt. Es ist an einen Kanalanschluss 91 des Anbauhäckslers 1 angebaut. Der Kanalanschluss 91 weist eine Kanalöffnung (nicht gezeigt) auf, durch die das Erntegut 4 in einen Förderkanal (nicht bezeichnet) des Anbauhäckslers 1 gefördert wird.

Der Anbauhäcksler 1 ist in Fig. 1 in einer Maisernteanordnung (nicht bezeichnet) gezeigt. In der Maisernteanordnung ist in den Anbauhäcksler 1 ein Korncracker 8 aufgenommen, der zum Aufbrechen der Maiskörner vorgesehen ist, damit die Stärke im Innern der Maiskörner von außen zugänglich ist, und der Mais von Nutztieren verwertbar ist. Zudem kann der Korncracker 8 bei der Ernte von Ganzpflanzen zur Zerkleinerung von Getreidekörnern eingesetzt werden. Er ist in einer Heuernteanordnung (nicht gezeigt) nicht im Anbauhäcksler 1 vorgesehen, um ein Zerfasern des Grases oder Heus bei der Ernte zu vermeiden.

Der Anbauhäcksler 1 weist ein Vorpressaggregat 60 auf, dass sich dem Kanalanschluss 91 unmittelbar anschließt. Das Vorpressaggregat 60 ist in einer Arbeitsrichtung 41, in der der Anbauhäcksler 1 im Erntebetrieb über ein Feld (nicht bezeichnet) gefahren wird, vorne angeordnet. Es ist dem Kanalanschluss 91 unmittelbar nachgeordnet. Das Erntegut 4 fließt daher vom Vorsatzgerät 9 aus durch die Kanalöffnung unmittelbar in das Vorpressaggregat 60 ein.

Das Vorpressaggregat 60 weist hier fünf Förderwalzen 61 auf, die den Förderkanal begrenzen. Dabei sind zwei der Vorpresswalzen 61 als obere, und drei als untere Vorpresswalzen 61 vorgesehen.

Dem Vorpressaggregat 60 ist in Gutflussrichtung 40 ein Zerkleinerungsaggregat 62 nachgeordnet. Das Zerkleinerungsaggregat 62 umfasst eine Gegenschneide 65 sowie eine Häckseltrommel 64, zwischen denen das Erntegut 4 gehäckselt wird. Die Gegenschneide 65 ist hinter der letzten unteren Vorpresswalze 61 angeordnet und so positioniert, dass das Erntegut 4 etwa rechtwinkelig in die Häckseltrommel 64 einfließt. Dadurch kann ein möglichst glatter Schnitt erfolgen, ohne dass das Erntegut 4 dabei zerfasert.

Prinzipiell können im Zerkleinerungsaggregat 62 zum Häckseln des Ernteguts 4 auch Scheibenräder (nicht gezeigt) verwendet werden. Jedoch ist mit der Häckseltrommel 64 eine erheblich bessere, gleichbleibend gute Häckselqualität erreichbar. Das bezüglich der gestellten Aufgabe wichtige höhere Gewicht der Häckseltrommel 64 gegenüber Scheibenrädern ist hier daher zugunsten der besseren Häckselqualität bewusst in Kauf genommen.

Die Häckseltrommel 64 wird im Betrieb des Anbauhäckslers 1 um eine Häckselachse 63 in eine Häckseldrehrichtung 66 gedreht. An der Häckseltrommel 64 sind in Häckseldrehrichtung 66 gleichmäßig verteilt Häckselmesser (nicht gezeigt) angeordnet, die zum Schneiden des Ernteguts 4 vorgesehen sind. Im Betrieb des Anbauhäckslers 1 drehen sich die Häckselmesser mit der Häckseltrommel 64 in die Häckseldrehrichtung 66. Dabei gerät das Erntegut 4 in Eingriff der Häckselmesser und wird jeweils zwischen einem der Häckselmesser und der Gegenschneide 65 geschnitten.

Der Förderkanal ist im Zerkleinerungsaggregat 62 durch die Häckseltrommel 64 und einen sich wenigstens bereichsweise konzentrisch zur Häckseltrommel 64 erstreckenden Förderboden 67 begrenzt.

Der Korncracker 8 ist dem Zerkleinerungsaggregat 62 in Gutflussrichtung 40 nachgeordnet. Er weist zwei Crackerwalzen 81 auf. Die Crackerwalzen 81 drehen sich im Betrieb des Anbauhäckslers 1 jeweils um eine Crackerachse (nicht bezeichnet) in eine Crackerdrehrichtung (nicht bezeichnet), wobei die Crackerdrehrichtungen der beiden Crackerwalzen 81 entgegengesetzt zueinander sind. Der Mais wird im Betrieb des Anbauhäckslers 1 zwischen den Crackerwalzen 81 hindurch gefördert. Dabei wird die Schale der Maiskörner oder Getreidekörner aufgebrochen, so dass die Stärke im Innern der Maiskörner zugänglich ist. Im Korncracker 8 erstreckt sich der Förderkanal daher zwischen den Crackerwalzen 81.

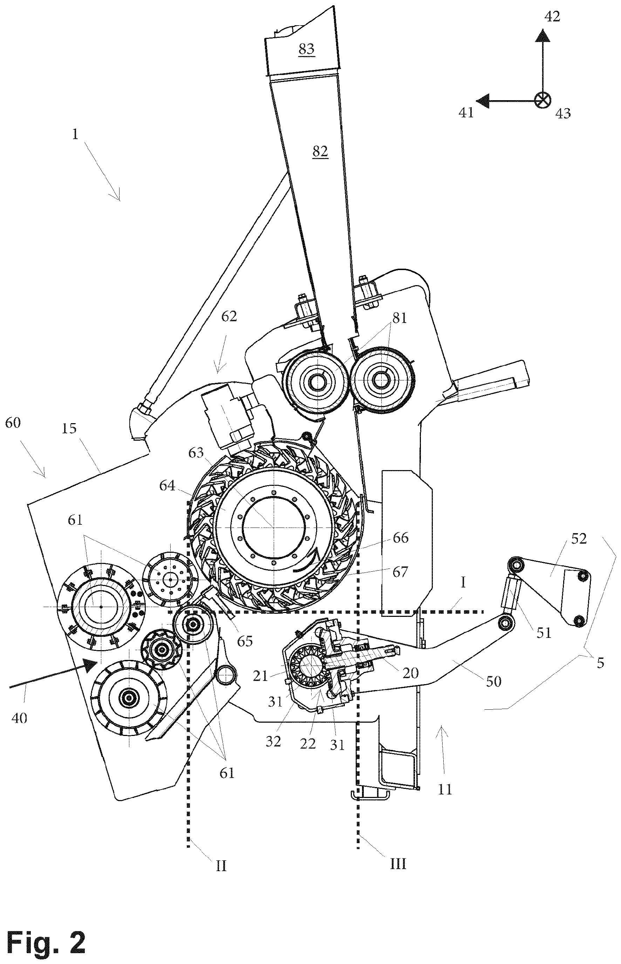

Anschließend wird das gehäckselte Erntegut 4 durch einen Auswurfstutzen 82 ausgeworfen. Dieser ist ortsfest an einem Gehäuse 15 (s. Fig. 2) des Anbauhäckslers 1 befestigt. Am Auswurfstutzen 82 ist ein Auswurfrohr 83 befestigt, das als Verlängerung dient, und mit dem das Erntegut 4 auf einen Ladewagen (nicht gezeigt) ausgeworfen werden kann. Das Auswurfrohr 83 ist hier nur mittels eines Teilstücks schematisch dargestellt. An einem offenen Ende (nicht gezeigt) des Auswurfrohrs 92 ist eine verstellbare Auswurfklappe (nicht gezeigt) vorgesehen, mit dem ein Auftreffpunkt des Ernteguts 5 im Ladewagen einstellbar ist.

Der Anbauhäcksler 1 ist im Wesentlichen mittig am Schlepper 7 angeordnet. Dadurch befindet sich ein Schwerpunkt (nicht dargestellt) des Anbauhäckslers 1 auf einer diesen in einer Querrichtung 43, die sich quer zur Arbeitsrichtung 41 und quer zu einer Erstreckungsrichtung 42 erstreckt, etwa mittig durchsetzenden Ebene (nicht gezeigt). Dabei ist die Erstreckungsrichtung 42 in ebenem, insbesondere horizontalem, Gelände die vertikale Richtung.

Das Erntegut 4 wird daher etwa mittig des Anbauhäckslers 1 eingezogen. Weiterhin ist der Auswurfstutzen 82 etwa mittig am Gehäuse 15 des Anbauhäckslers 1 montiert. Das Erntegut 4 wird somit nach Eintritt durch die Kanalöffnung in den Anbauhäcksler 1 nicht mehr wesentlich in oder gegen die Querrichtung 43 umgelenkt, bis es durch den Auswurfstutzen 82 in das Auswurfrohr 83 eingeleitet wird. Erst dort wird es in Richtung des Ladewagens umgelenkt, der seitlich oder hinter dem Schlepper 7 fahren kann. Der Anbauhäcksler 1, insbesondere seine Aggregate 60, 62, wird dadurch im Wesentlichen symmetrisch ausgelastet.

Fig. 2 zeigt den Anbauhäcksler aus Fig. 1 schematisch in einem Schnittbild. Sichtbar ist das Vorpressaggregat 60 mit seinen fünf Vorpresswalzen 61 und das sich diesem in Gutflussrichtung 40 anschließende Zerkleinerungsaggregat 62 mit seiner Häckseltrommel 64, der Gegenschneide 65 und dem Förderboden 67. Dem Zerkleinerungsaggregat 62 ist der Korncracker 8 nachgeordnet. Oberhalb des Korncrackers 8 ist zudem der Auswurfstutzen 82 mit dem an ihn montierten Auswurfrohr 83 dargestellt.

Die Aggregate 60, 62, 8 des Anbauhäckslers 1 werden mittels eines Getriebes 22 angetrieben, das an die Zapfwelle 74 des Schleppers 7 anschließbar ist.

Dafür weist der Anbauhäcksler 1 ein Getriebeanordnung 2 auf, die eine Antriebswelle 20 zum Antrieb des Getriebes 22, das Getriebe 22 und eine Abtriebswelle 21 umfasst. Das Getriebe 22 ist hier als Kegelradgetriebe ausgebildet. Es ist in ein Getriebegehäuse 32 aufgenommen, in das die Antriebswelle 20 eingeführt ist. An der Antriebswelle 20 ist ein erstes Getrieberad 31, hier ein Kegelrad, drehfest angeordnet. Das erste Getrieberad 31 kämmt mit einem zweiten Getrieberad 31, das hier ebenfalls als Kegelrad ausgebildet ist. Das zweite Getrieberad 31 ist drehfest an der Abtriebswelle 21 montiert. Die Abtriebswelle 21 ist beidseitig des Getriebegehäuses 32 aus diesem herausgeführt. Dabei sind Antriebswelle 20 und Abtriebswelle 21 rechtwinkelig zueinander angeordnet.

Das Getriebe 22 und/oder die Abtriebswelle 21 des Getriebes 22 sind unterhalb einer das Zerkleinerungsaggregat 62 begrenzenden ersten fiktiven Einbauebene I angeordnet. Dabei erstreckt sich die erste Einbauebene I quer zur Erstreckungsrichtung 42. Sie ist daher durch eine sich in Arbeitsrichtung 41 und eine sich in Querrichtung 43 erstreckende Linie (nicht gezeigt) aufgespannt. Weiterhin ist sie unterhalb der Häckseltrommel 64 an diese angelegt. Sie erstreckt sich in einer tangentialen Richtung zur Häckseltrommel 64, insbesondere in eine horizontale Richtung.

In der dargestellten Ausführungsform sind das Getriebe 22 und/oder die Abtriebswelle nicht nur unterhalb der ersten Einbauebene I, sondern unterhalb des Zerkleinerungsaggregates 62 angeordnet. Zur Verdeutlichung zeigt Fig. 2 eine zweite und eine dritte, einander gegenüberliegende, fiktive Ebene II, III, die das Zerkleinerungsaggregat begrenzen. Sowohl die zweite fiktive Ebene II als auch die dritte fiktive Ebene III erstrecken sich quer zur Erstreckungsrichtung 42 und liegen hier tangential an der Häckseltrommel 64 an. Sowohl das Getriebe 22 als auch die Abtriebswelle 21 sind zwischen der zweiten und der dritten fiktiven Ebene II, III angeordnet. Sie sind hier daher in Erstreckungsrichtung 42 unterhalb der Häckseltrommel 64 angeordnet.

Durch den Einbau des Getriebes 22 unterhalb ersten fiktiven Einbauebene I, und hier konkret unterhalb der Häckseltrommel 64, ist der Anbauhäcksler 1 in Arbeitsrichtung 41 sehr kurz und kompakt gebaut. Dies ermöglicht vorteilhaft, dass das auf die Hinterachse des Schleppers 7 wirkende Gewicht ausreichend klein ist. Auch bei Anbau des Anbauhäckslers 1 am Heckhubwerk 77 des Schleppers 7 wird die Vorderachse (nicht bezeichnet) des Schleppers 7 daher nicht zu stark entlastet, und der Schlepper 7 während der Ernte auch nicht überlastet.

Das Zerkleinerungsaggregat 62 ist oberhalb des Getriebes 22 verhältnismäßig hoch angeordnet. Daher weist der Anbauhäcksler 1 einen verhältnismäßig steil ansteigenden Förderkanal im Vorpressaggregat 60 auf.

Das Vorpressaggregat ist durch die fünf Vorpresswalzen 61 gebildet, zwischen denen sich der Förderkanal erstreckt. Dabei weist das Vorpressaggregat 60 drei untere Vorpresswalzen 61 auf, die einen den Förderkanal begrenzenden unteren Kanalweg (nicht bezeichnet) bilden, sowie einen durch die beiden oberen Vorpresswalzen 61 gebildeten, den Förderkanal begrenzenden oberen Kanalweg (nicht bezeichnet).

Auch der steile Anstieg im Vorpressaggregat 60 hat den Vorteil, dass der Anbauhäcksler 1 dadurch sehr kurz und kompakt gebaut ist. Er trägt daher vorteilhaft dazu bei, den Schwerpunktabstand zwischen dem Anbauhäcksler 1 und der ihn tragenden Achse 80 möglichst klein zu halten.

Im dargestellten Ausführungsbeispiel ist das Getriebe 22 in Erstreckungsrichtung 42 etwa fluchtend unterhalb des Auswurfstutzens 82 angeordnet. Um den Anbauhäcksler 1 näher an den Schlepper 7 anbauen zu können, kann stattdessen die Antriebsachse 21 etwa fluchtend zum Auswurfstutzen 82 angeordnet sein. Das Getriebe 22 kann aber auch noch näher an eine den Anbauhäcksler 1 begrenzende Rückwand (nicht bezeichnet) seines Gehäuses 15 herangeführt sein.

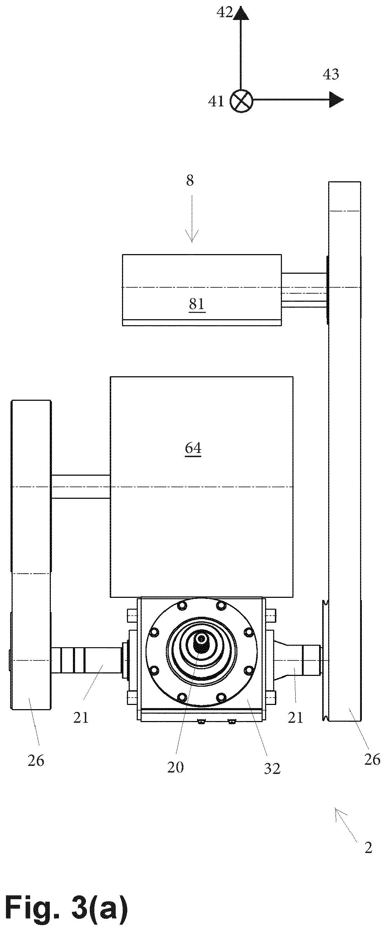

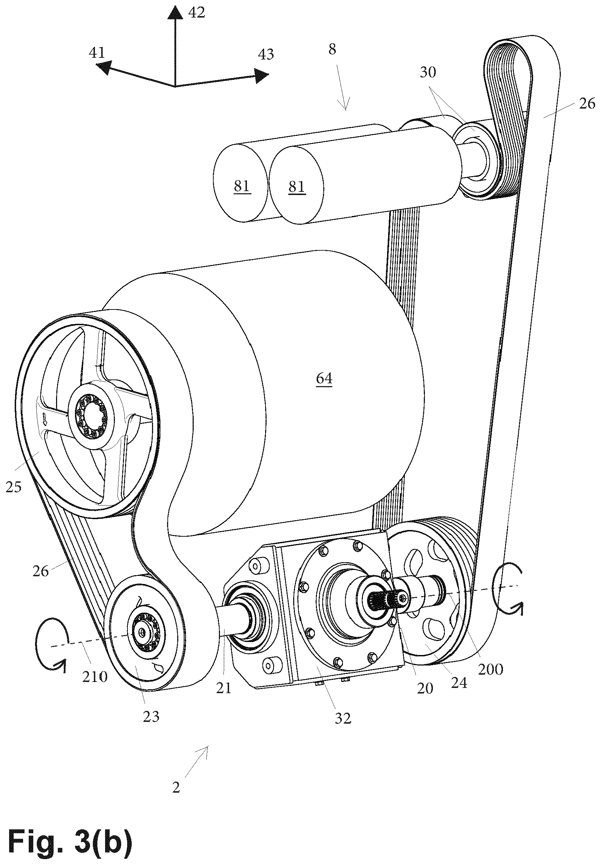

Fig. 3 zeigt in (a) schematisch eine Frontansicht der Getriebeanordnung 2 des Anbauhäckslers 1, und in (b) schematisch eine perspektivische Ansicht der Getriebeanordnung 2 aus (a). In die Fig. 3 (a) und (b) sind die Häckseltrommel 64 des Zerkleinerungsaggregats 62 und die Crackerwalzen 81 des Korncrackers 8 mit aufgenommen, so dass ihre triebliche Verbindung zur Getriebeanordnung 2 verdeutlicht ist.

Die Abtriebswelle 21 ist an zwei einander gegenüberliegenden Seiten (nicht bezeichnet) des Getriebegehäuses 32 durch dieses hindurchgeführt. An einer ersten der beiden Seiten treibt es die Häckseltrommel 64 an. An einer zweiten, der ersten gegenüberliegenden Seite treibt es den Korncracker 8 an. Zum Antrieb der Häckseltrommel 64 und des Korncrackers 8 ist hier jeweils ein Riementrieb 26 vorgesehen. Es können aber auch Zahnräder genutzt werden. Zudem kann das Vorpressaggregat 60 mittels der Abtriebswelle 21 angetrieben werden. Durch den beidseitigen Antrieb von Aggregaten 62, 8, 60 des Anbauhäckslers 1 wird das Getriebe 22 möglichst symmetrisch belastet. Weiterhin kann die Abtriebswelle 21 auch für den Antrieb des Vorsatzgerätes 9 genutzt werden.

Fig. 4 zeigt in (a) schematisch einen Hubwerksanschluss 11 des Anbauhäckslers 1 an ein Hubwerk 77 des Schleppers 7, wobei sich das Hubwerk in einer Grundposition G befindet. Fig. 4 (b) zeigt den Hubwerksanschluss 11 an das Hubwerk 77 des Schleppers 7, wobei sich dieses in einer angehobenen Position A befindet.

Am Getriebegehäuse 32 ist eine Lenkeranordnung 5 befestigt. Die Lenkeranordnung 5 weist einen Hebel 50, der am Getriebegehäuse 32 festgelegt ist, einen Lenker 51 und ein Befestigungsbauteil 52, hier eine Befestigungsplatte, auf. Der Lenker 51 ist zu Montagezwecken beim Anbau des Anbauhäckslers 1 an den Schlepper 7 zumindest geringfügig teleskopierbar vorgesehen. Das Befestigungsbauteil 52 ist zum Festlegen an einen Rahmen 73 des Schleppers 7 vorgesehen.

Die Lenkeranordnung 5 wirkt im hier gezeigten, an den Rahmen angebauten Zustand als Drehmomentstütze für das Getriebe 22.

Die Abtriebswelle 21 ist in zwei einander gegenüberliegenden Gehäusebauteilen, zwischen denen sie sich erstreckt, und die hier durch Gehäusewände 16 gebildet sind, frei drehbar gelagert. Die Gehäusewände 16 begrenzen das Zerkleinerungsaggregat 62 jeweils in einer Querrichtung 43. Dabei ist das Getriebegehäuse 32 oder das Getriebe 22 in Querrichtung 43 etwa mittig zwischen den Gehäusewänden 16 angeordnet. Die Gehäusewände 16 werden hier auch zum Lagern der Häckseltrommel 64 genutzt.

Das Getriebegehäuse 32 ist durch die Lenkeranordnung 5 mit dem Rahmen 73 des Schleppers 7 verbunden. Da die Abtriebswelle 21 frei drehbar in den Gehäusewänden 16 gelagert ist, kann sich das Getriebegehäuse 32 beim Anheben oder Absenken des Hubwerks 77 drehen. Dabei dreht sich auch die Antriebswelle 20 mit. Dadurch ist die Antriebswelle 20 unabhängig von einer Anbauhöhe H_{G}, H_{A} des Anbauhäckslers 1 am Schlepper 7 immer in einem optimierten Einstellwinkel 59 (s. Fig. 4 (b) zur Zapfwelle 74 angeordnet. Dies ist im Folgenden anhand der Fig. Fig. 4 (a) und (b) beschrieben.

Gezeigt ist dort der Hubwerksanschluss 1 an das Heckhubwerk 77 des Schleppers 7. Dabei sind die Zapfwelle 74 und die Antriebswelle 20 mittels einer schematisch dargestellten Kardanwelle 57 miteinander verbunden.

In Fig. 4 (a) befindet sich das Heckhubwerk 77 in einer Grundposition G. Dadurch wird der Anbauhäcksler 1 vom Schlepper 7 in einer ersten Anbauhöhe H_{G} getragen.

Ausgehend von der Grundposition G wird der Unterlenker 76 durch Betätigen einer Hubstange 79 des Schleppers 7, die am Unterlenker 76 des Heckhubwerks 77 drehbar in einem Drehpunkt 78 angelenkt ist, angehoben. Dadurch werden der Unterlenker 76, und mit ihm auch der Oberlenker 75 des Heckhubwerks 77 jeweils um einen Anlenkpunkt 70 am Schlepper 7 in eine Heberichtung 69 gedreht. Das Heckhubwerk 77 wird dabei von der Grundposition G in die angehobene Position A verstellt, die Fig. 4 (b) zeigt.

Der Anbauhäcksler 1 wird dabei von der ersten Anbauhöhe H_{G} in eine Hubrichtung 17 in eine zweite Anbauhöhe H_{A} verstellt. Durch Betätigen der Hubstange 79 gegen die Heberichtung 69 kann er in die erste Anbauhöhe H_{G} zurück verstellt werden.

Da das Getriebegehäuse 32 des Anbauhäckslers 1 mittels einer Lenkeranordnung 5 am Rahmen 73 des Schleppers 7 angelenkt ist, dreht es sich beim Drehen des Unterlenkers 76 und/oder des Oberlenkers 75 mit. Dadurch werden das Getriebe 22, die Antriebswelle 20 und/oder die Abtriebswelle 21 mit dem Getriebegehäuse 32 gedreht. Dadurch wird der Einstellwinkel 59 zwischen der Antriebswellenachse 200 und der Zapfwellenachse 740 eingestellt. Dadurch bilden die Kardanwelle 57 gemeinsam mit diesen ein gleichschenkliges Dreieck.

Ein Kardanwinkel 58 zwischen der Zapfwelle 74 und der Kardanwelle 57 ist daher immer annähernd gleich oder sogar gleich einem Getriebewinkel 58' zwischen der Antriebswelle 20 und der Kardanwelle 57. Dadurch sind diese Antriebskomponenten 74, 20 unabhängig von der Anbauhöhe H_{G}, H_{A} des Anbauhäckslers 1 optimal zueinander positioniert.

Sie sind zueinander unabhängig von der Anbauhöhe H_{G}, H_{A} des Anbauhäckslers 1 am Schlepper 7 in einer annähernd gleichwinkeligen w- Beuge (s. Fig. 4 (b)) oder in einer annähernd gleichwinkeligen z- Beuge (s. Fig. 4 (a)) ausgerichtet.

Dadurch kann ein Antrieb der Antriebswelle 20 mit einer konstanten Geschwindigkeit erfolgen. Weiterhin können große Winkel 58, 58' an oder in der Kardanwelle 57 vermieden werden, so dass diese trotz sehr nahem Anbau des Anbauhäckslers 1 an den Schlepper 7 nicht übermäßig belastet wird. Dies ermöglicht ein schnelles Arbeiten mit dem Anbauhäcksler. Dieser kann hoch angehoben und vom Hubwerk getragen werden. Zudem weisen die Antriebskomponenten eine lange Lebensdauer auf.

## Patentansprüche

1. Anbauhäcksler (1) zum Anbauen an einen Schlepper (7), mit einem Kanalanschluss (91), an den ein Vorsatzgerät (9) zum Ernten von Erntegut (4) anbaubar ist, wobei sich in einer Gutflussrichtung (40) ein Vorpressaggregat (60) zum Vorpressen des Ernteguts (4) unmittelbar anschließt, dem ein Zerkleinerungsaggregat (62) zum Häckseln des Ernteguts (4) nachgeordnet ist, wobei der Anbauhäcksler (1) zum Antrieb der Aggregate (60, 62) und/oder des Vorsatzgerätes (9) ein Getriebe (22) umfasst, das an eine Zapfwelle (74) des Schleppers (7) anschließbar ist,
**dadurch gekennzeichnet, dass**
das Getriebe (22) und/oder eine Abtriebswelle (21) des Getriebes (22) unterhalb einer das Zerkleinerungsaggregat (62) begrenzenden ersten fiktiven Einbauebene (I), die sich quer zu einer Erstreckungsrichtung (42) erstreckt, oder unterhalb des Zerkleinerungsaggregates (62) angeordnet sind.

2. Anbauhäcksler (1) nach dem Oberbegriff des Patentanspruchs 1 oder nach Anspruch 1, **dadurch gekennzeichnet, dass** das Zerkleinerungsaggregat (62) in einer Querrichtung (43), die sich quer zur Erstreckungsrichtung (42) und quer zu einer Arbeitsrichtung (41) des Anbauhäckslers (1) erstreckt, durch wenigstens ein Gehäusebauteil begrenzt ist, wobei die Abtriebswelle (21) des Getriebes (22) frei drehbar in dem Gehäusebauteil gelagert ist.

3. Anbauhäcksler (1) nach einem der vorherigen Ansprüche, **dadurch gekennzeichnet, dass** das Gehäusebauteil eine Gehäusewand (16) ist, und dass das Zerkleinerungsaggregat (62) zwei voneinander beabstandete, einander gegenüberliegende Gehäusewände (16) umfasst, wobei das Getriebe (22), insbesondere in Querrichtung (43) mittig, zwischen den Gehäusewänden (16) angeordnet ist, wobei die Abtriebswelle (21) in den Gehäusewänden (16) frei drehbar gelagert ist.

4. Anbauhäcksler (1) nach einem der vorherigen Ansprüche, **dadurch gekennzeichnet, dass** er eine zum Anlenken an einen Rahmen (73) des Schleppers (7) vorgesehene Lenkeranordnung (5) aufweist, die als Drehmomentstütze für das Getriebe (22) wirkt.

5. Anbauhäcksler (1) nach einem der vorherigen Ansprüche, **dadurch gekennzeichnet, dass** das Zerkleinerungsaggregat (62) eine Häckseltrommel (64) sowie einen Förderboden (67) umfasst, und in Arbeitsrichtung (41) durch eine zweite und eine dritte, einander gegenüberliegende, fiktive Ebene (II, III) begrenzt ist, die sich quer zur Erstreckungsrichtung (42) erstrecken und tangential an der Häckseltrommel (64) oder dem Förderboden (67) anliegen, wobei das Getriebe (22) und/oder die Abtriebswelle (21) zwischen der zweiten und der dritten fiktiven Ebene (II, III) angeordnet sind.

6. Anbauhäcksler (1) nach einem der vorherigen Ansprüche, **dadurch gekennzeichnet, dass** er zum Auswerfen des Ernteguts einen Auswurfstutzen (82) aufweist, der dem Zerkleinerungsaggregat (62) in Gutflussrichtung (40) nachgeordnet ist, und der in Erstreckungsrichtung (42) oberhalb der Häckseltrommel (64) angeordnet ist, wobei das Getriebe (22) und/oder die Abtriebswelle (21) in Erstreckungsrichtung (42) etwa fluchtend unterhalb des Auswurfstutzens (82) angeordnet sind.

7. Anbauhäcksler (1) nach einem der vorherigen Ansprüche, **dadurch gekennzeichnet, dass** die Häckseltrommel (64) in den Gehäusewänden (16) gelagert ist.

8. Anbauhäcksler (1) nach einem der vorherigen Ansprüche, **dadurch gekennzeichnet, dass** die Abtriebswelle (21) zum Antrieb der Häckseltrommel (64) und/oder eines Korncrackers (8) vorgesehen ist, wobei die Abtriebswelle (21) an einer ersten Seite des Getriebes (22) trieblich mit der Häckseltrommel (64), und an einer zweiten, der ersten abgewandten Seite des Getriebes (22), trieblich mit dem Korncracker (8), verbunden ist.

9. Anbauhäcksler (1) nach einem der vorherigen Ansprüche, **dadurch gekennzeichnet, dass** für das Getriebe (22) eine Trockensumpfschmierung vorgesehen ist.

10. Arbeitszug (100) umfassend einen Schlepper (7) und einen an ein Hubwerk (77) des Schleppers (7) angebauten Anbauhäcksler (1) nach einem der Ansprüche 1 - 9.

11. Arbeitszug (100) nach Anspruch 10, **dadurch gekennzeichnet, dass** die Antriebswelle (20) des Getriebes (22) unabhängig von einer Hubstellung (G, A) des Hubwerks (77) des Schleppers (7) mittels einer Kardanwelle (57) in einer annähernd gleichwinkeligen w- Beuge oder z- Beuge mit der Zapfwelle (74) des Schleppers (7) verbunden ist.

12. Arbeitszug (100) nach einem der Ansprüche 10 - 11, **dadurch gekennzeichnet, dass** das Getriebegehäuse (32) des Getriebes (22) mittels einer Lenkeranordnung (5) mit einem Rahmen (73) des Schleppers (7) verbunden ist.

13. Verfahren zum Einstellen eines Einstellwinkels (59) eines Anbauhäckslers (1) relativ zu einer Zapfwelle (74) eines Schleppers (7) eines Arbeitszugs (100) nach einem der Ansprüche 10 - 12, und/oder einer Anbauhöhe (H) des Anbauhäckslers (1) an einem Hubwerk (77) des Schleppers (7), bei dem
o eine an einem Unterlenker (76) des Hubwerks (77) drehbar angelenkte Hubstange (79) des Schleppers (7) betätigt wird,
o wobei sich ein Unterlenker (76) und/oder ein Oberlenker (75) des Hubwerks (77) um einen Anlenkpunkt (70) am Schlepper (7) in oder gegen eine Heberichtung (69) dreht, so dass sich das Hubwerk (77) von einer Grundposition (G) in eine angehobene Position (A) oder zurück verstellt,
o wobei ein Getriebegehäuse (32) des Anbauhäckslers (1) mittels einer Lenkeranordnung (5) an einem Rahmen (73) des Schleppers (7) angelenkt ist, so dass sich das Getriebegehäuse (32) beim Drehen des Unterlenkers (76) und/oder des Oberlenkers (75) dreht,
o wobei sich ein im Getriebegehäuse (32) angeordnetes Getriebe (22) und/oder eine Antriebswelle (20) des Getriebes (22) und/oder eine Abtriebswelle (21) des Getriebes (22) mit dem Getriebegehäuse (32) drehen,
o wobei ein Gehäuse (15) des Anbauhäckslers (1) in oder gegen eine Hubrichtung (17) von einer Grundhöhe (H_{G}) in die Anbauhöhe (H_{A}) angehoben oder zurück abgesenkt wird.
